# FASCICULE DE BREVET EUROPEEN

(11) **EP 3 500 620 B1**
(45) Date de publication et mention de la délivrance du brevet: **27.01.2021**
(21) Numéro de dépôt: 17751785.1
(22) Date de dépôt: 18.08.2017
(51) Int. Cl.: C08J 9/00, C08J 9/14, C08L 23/06

(54) **MOUSSES POLYMERES AVEC UNE RESISTANCE AMELIOREE A LA TEMPERATURE**
POLYMERSCHAUMSTOFFE MIT VERBESSERTER TEMPERATURBESTÄNDIGKEIT
POLYMER FOAMS WITH IMPROVED TEMPERATURE RESISTANCE

(30) Priorité: 19.08.2016 BE 201605647
(43) Date de publication de la demande: 26.06.2019
(73) Titulaire: NMC S.A., 4731 Eynatten (BE)
(72) Inventeur: SCHÖPGES, Florence, 4831 Bilstain (BE); JOB, Denis, 4031 Angleur (BE); MAYERES, Jean-Pierre, 4700 Eupen (BE)
(74) Mandataire: Office Freylinger
(86) Numéro de dépôt international: PCT/EP2017/070964
(87) Numéro de publication internationale: WO 2018/033637

(56) Documents cités:
- WO-A1-99/51667
- US-A- 4 102 829
- US-A1- 2015 307 679

## Description

### Domaine technique

La présente invention concerne d'une manière générale l'utilisation de mousse à base de polyoléfines dans la fabrication de tubes d'isolation thermique, de panneaux d'isolation thermique, de joints d'étanchéité, de cales pour pièces à haute température, pour des applications nécessitant une résistance à des températures supérieures à 90 °C, voire 100 °C ou plus.

### Etat de la technique

Les mousses polymères pour des applications d'isolation thermique sont connues depuis des décennies. En particulier, il s'agit de mousses à cellules majoritairement fermées, en particulier des mousses à base de polyéthylène basse densité (LDPE).

Bien qu'il existe de nombreux types de mousses, leur résistance à des températures élevées, par exemple au-delà de 90 °C est limitée, et ce d'autant plus que leur densité est faible. Or justement, les mousses de densité réduites offrent les meilleures propriétés d'isolation thermique.

La cristallinité d'un LDPE influence directement la densité de celui-ci, et détermine sa température de fusion. Typiquement, un LDPE présentera une température de fusion (par DSC) entre de 105 et 115°C. En l'occurrence, les mousses à base de LDPE présentant des densités basses (inférieures à 50 kg/m³), ne résistent qu'à des températures de 80 à 90 °C. Au-delà, le changement de volume, dû à un début de fusion de la mousse, est trop important pour ces applications.

WO 99/51667 A1 divulgue une composition polymérique pour produire de la mousse comprenant du polyéthylène haute densité, un polymère alcénylaromatique et optionnellement une résine de modification de la résilience. Le polyéthylène haute densité à une moyenne z des poids moléculaires Mz supérieure à environ 1000000. Le polymère alcénylaromatique est présent à une quantité d'environ 3 à 45 pourcent en poids de la composition polymérique. La résine de modification de la résilience est présente en quantité de 0 à 40 pourcent en poids de la composition polymérique. La mousse a été produite en l'absence d'une quantité importante d'agent de contrôle de la stabilité.

US 4,102,829 A divulgue une mousse thermoplastique étant un mélange d'ionomères et de polymères de polyoléfines par extrusion avec un agent d'expansion volatil à température et pression élevées. La densité des mousses produites est de 15 à 45 kg/m³ et satisfont les conditions d'extrusion des mousses, de rigidité et de force compressive, de résistance thermique et d'adhésion.

US 2015/0307679 A1 divulgue une composition comprenant un polymère thermoplastique à base d'éthylène comprenant un polyéthylène haute densité (HDPE) mélangé avec un modificateur, optionnellement un agent d'expansion, optionnellement du noir de carbone et/ou un ou plusieurs additif(s) afin de produire la mousse.

Il existe par conséquent un besoin pour des mousses polymères résistantes à des températures plus élevées, surtout des mousses de faible densité, par exemple inférieure à 50 kg/m³.

### Objet de l'invention

Un objet de la présente invention est par conséquent de trouver des compositions polymères moussables qui présentent une bonne résistance aux températures élevées, notamment au-delà de 90 °C, voire 100 °C ou plus, même sous forme de mousses de faibles densités, tout en restant faciles à fabriquer, de préférence de manière similaire aux mousses polyoléfiniques connues.

### Description générale de l'invention

Afin de résoudre le problème mentionné ci-dessus, la présente invention propose l'utilisation d'une mousse à base de polyoléfines comprenant un mélange de
(a) 40,9 à 99,9 % en poids d'au moins un polymère HDPE à distribution multimodale des poids moléculaires,
(b) de 0,1 à 59,1 % en poids d'au moins un ionomère choisi parmi les copolymères thermoplastiques réticulés ioniquement, dans lesquels une proportion de 1 à 40 % de motifs de répétition porte des groupes ioniques et optionnellement des groupes ionisables, et
(c) de 0 à 59 % en poids d'au moins un constituant sélectionné parmi les LDPE, les LDPE métallocènes, les LLDPE, les LLDPE métallocènes, les MDPE, les copolymères polaires d'éthylène, les élastomères thermoplastiques à blocs styréniques et les élastomères thermoplastiques contenant une phase élastomère de type silicone réticulé, ou leurs mélanges,
pour la fabrication de tubes d'isolation thermique, de panneaux d'isolation thermique, de cales de séparation de pièces à haute température, ou de joints d'étanchéité, résistants à des températures supérieures à 90 °C

Les polyéthylènes haute densité (HDPE) multimodaux utilisables dans le cadre de la présente invention présentent donc au moins une distribution bimodale des poids moléculaires du polymère HDPE. Ils sont constitués par un mélange homogène de deux ou plusieurs fractions de polymères de poids moléculaires distincts. Ils peuvent être préparés soit en utilisant une cascade de réacteurs de polymérisation en série (par exemple : procédé BASF HOSTALEN à deux réacteurs en série, procédé HOSTALEN ACP [Advanced Cascade Process] à 3 réacteurs en cascade, les conditions de polymérisation pouvant être ajustées indépendamment sur chaque réacteur), soit en utilisant dans un seul réacteur de polymérisation des catalyseurs ayant plusieurs sites d'activité différentes sur un même support, soit par mélangeage en extrusion de polyéthylènes ayant différents poids moléculaires.

Les HDPE du composant (a) ont généralement une densité de 940 à 970 kg/m³. L'indice de fluidité (MFI, mesuré à 190°C avec une charge de 5,0kg) des HDPE multimodaux utilisable pour l'invention peut par exemple être compris entre 0,05 et 10 g/10 minutes, de préférence entre 0,1 et 5 g/10 minutes, plus particulièrement préféré entre 0,2 et 2,5 g/10 minutes.

Il est à noter que selon l'invention plusieurs HDPE multimodaux peuvent être utilisés en mélange.

D'une manière générale, la distribution multimodale des poids moléculaires dans un HDPE multimodal permet d'en améliorer la processabilité, ainsi que sa viscosité élongationnelle.

Le ou les polymères HDPE à distribution multimodale des poids moléculaires du composant (a) est/sont de préférence un ou des polymères HDPE comportant au moins deux fractions, chacune de ces fractions représentant au moins 1 % en poids du ou des polymères HDPE, ayant des moyennes pondérales du poids moléculaire (M_{w}) différentes. Ledit ou lesdits polymères HDPE ont en général un rapport M_{w}/Mₙ total d'au moins 2,5, de préférence d'au moins 8, de manière davantage préférée d'au moins 11, Mₙ étant la moyenne en nombre des poids moléculaires. Ce rapport M_{w}/Mₙ total est généralement d'au plus 60, de préférence d'au plus 30, de manière davantage préférée d'au plus 25, en particulier d'au plus 18. Des polymères HDPE avec un M_{w}/Mₙ total entre 10 et 20 conviennent en règle générale très bien comme polymère HDPE à distribution multimodale des poids moléculaires du composant (a). Le poids moléculaire moyen en nombre (Mₙ, aussi appelé masse molaire moyenne en nombre) est la moyenne des masses molaires pondérée par le nombre de chaînes de chaque longueur, alors que le poids moléculaire moyen en poids ou pondéral (M_{w}, aussi appelé masse molaire moyenne en masse) est la moyenne des masses molaires pondérée par la masse de chaînes de chaque longueur. La détermination des poids moléculaires M_{w} et Mₙ peut se faire selon toute méthode connue, notamment par chromatographie par perméation de gel ou d'exclusion de taille, selon ISO16014-1, ISO16014-2 et/ou ISO16014-4, par exemple avec des standards de calibration utilisant du polystyrène linéaire à distribution moléculaire étroite. La distribution multimodale des poids moléculaires peut être aisément déterminée par exemple par inspection de la courbe des poids moléculaires qui présente un, deux ou plusieurs maxima. Dans le cas où il n'y a qu'un seul pic, une distribution multimodale se traduit alors par un pic anormalement large par rapport à une distribution Gaussienne. Par conséquent, il est possible d'opérer une déconvolution mathématique de ce pic en ses composants individuels d'une manière bien connue dans le domaine.

Le ou les ionomères du composant (b) est/sont choisi(s) parmi les copolymères thermoplastiques réticulés ioniquement, dans lesquels une proportion de 1 à ∼40 % de motifs de répétition porte des groupes ioniques et/ou ionisables (étant entendu qu'au moins une partie des groupes est sous forme ionique/ionisée). En pratique, le ou les ionomères sont choisis de préférence dans le groupe des polymères comprenant des groupes acides au moins partiellement neutralisés (donc ionisés) par des contre-ions monovalents ou divalents. Dans des variantes particulièrement préférées, il s'agit de copolymères d'éthylène et d'acide méthacrylique. Le pourcentage de groupes acides (c'est-à-dire de monomères à groupe acide par rapport aux autres monomères du polymère ionomère) peut également varier, mais est de préférence entre 5 et 30 %. Les contre-ions monovalents ou divalents sont préférentiellement choisis parmi le sodium, le lithium, le calcium, le magnésium et/ou le zinc, mais d'autres contre-ions peuvent également convenir. Le degré de neutralisation des groupes acides peut varier en fonction des composants utilisés et du degré de souplesse visé, de préférence le degré de neutralisation est inférieur à 80 %. Dans certains cas la quantité de contre-ions peut être plus élevée ou même être en excès par rapport à la stœchiométrie, c'est-à-dire le taux de neutralisation peut dépasser 100 %. Le ou les ionomères représentent 0,1 à 59,1 % en poids de la composition totale, de préférence 0,5 à 58 % en poids et de manière davantage préférée 0,75 à 50 % en poids, de manière particulièrement préférée 1 à 30 % en poids, en particulier 1,5 à 20 % en poids ou même 2 à 10 % en poids. Des ionomères particulièrement appropriés sont les ionomères SURLYN 1705-1, SURLYN 1652, SURLYN 9520 ou SURLYN 9650, d'autres peuvent également convenir comme par exemple SURLYN 1707, SURLYN 1901, SURLYN 9721, SURLYN 7940 ou SURLYN 9945.

Il a été constaté que les compositions comprenant 40,9 à 99,9 % en poids d'au moins un polymère HDPE à distribution multimodale des poids moléculaires et de 0,1 à 59,1 % en poids d'au moins un ionomère peuvent être facilement mises en œuvre pour produire des mousses polymères à cellules majoritairement fermées même avec des densités relativement faibles, même de moins de 30 kg/m³. En l'occurrence, le taux de cellules ouvertes est très faible, généralement bien en dessous d'une valeur de 1 % en volume, par exemple en dessous de 0,4 % en volume tel que mesuré par la méthode suivante :
1. Mesurer la densité de la mousse :
   1.a. pesée d'un morceau de mousse, immersion dans de l'eau d'un morceau de mousse, relevé du volume de liquide déplacé (si celui-ci varie au cours de la mesure à cause d'une trop grande quantité de cellules ouvertes, passer au point 1.b.), diviser le poids par le volume d'eau déplacé;
   1.b. si la mousse possède trop de cellules ouvertes, tel que lors de l'immersion dans l'eau, du liquide rentre de manière conséquente dans la mousse, faussant la valeur du volume de liquide déplacé au point 1.a : découper le morceau en un prisme de section simple (rond, rectangle, si tube laisser tel quel) et estimer le volume de l'échantillon par mesure et calcul.
2. Couper l'échantillon de mousse en morceaux de 2, 4, 6 et 8 cm ;
3. Si faisable, enlever la peau d'extrusion afin de mettre à jour la structure cellulaire, et si possible de manière à obtenir une section de coupe parallélépipédique et de section constante sur la longueur des morceaux;
4. Peser chaque morceau ;
5. Immerger pendant 10 minutes un morceau de mousse dans une solution de 95 % d'eau + 5 % de polyalkylèneglycol, dans un récipient étanche et raccordé à une pompe à vide, qui sera réglée entre à ± 300 et 500 mbar de dépression;
6. Sortir le morceau de mousse, le plonger 2 à 3 secondes dans du méthanol technique dénaturé;
7. Placer le morceau de mousse 5 minutes dans un four à 60°C, afin d'évaporer le liquide résiduel des faces externes ;
8. Le cas échéant, éponger avec un tissu absorbant les surfaces présentant éventuellement encore des traces de liquides;
9. Peser le morceau de mousse;
10. La différence de poids entre la pesée au point 9. et la pesée au point 4. représente la quantité en poids d'eau + polyalkylèneglycol absorbée par la porosité ouverte de la mousse. En convertissant ce poids en volume, via la densité du liquide absorbé, on calcule finalement le pourcentage en volume de liquide absorbé, en divisant le volume de liquide absorbé par le volume initial du morceau de mousse, calculé en divisant son poids (point 4) par sa densité (point 1).
11. Pour chaque longueur de l'échantillon de mousse découpée au point 2, répéter la procédure à partir du point 3.
12. Calculer la moyenne des valeurs de pourcentage en volume de liquide absorbé obtenus pour chaque longueur d'échantillon.

Il est à noter que, de plus, la fabrication des mousses utilisables selon l'invention peut se faire sans pré-moussage indésirable à la filière et sans rupture d'écoulement. L'aspect des mousses à la sortie de la filière est régulier, sans ondulations ou cannelures notables.

Les mousses utilisables selon l'invention peuvent de plus comprendre un troisième composant (c). Ce composant (c) constitue de 0 à 59 % en poids du poids total de la mousse et comprend au moins un polymère sélectionné notamment parmi les LDPE, les LDPE métallocènes (mLDPE), les LLDPE, les LLDPE métallocènes (mLLDPE), les MDPE, les copolymères polaires d'éthylène, les élastomères thermoplastiques à blocs styréniques et les élastomères thermoplastiques contenant une phase élastomère de type silicone réticulé.

Le LDPE (polyéthylène basse densité) est généralement produit par un procédé de polymérisation radicalaire libre sous haute pression d'éthylène. Il comporte une proportion élevée de branchement à longue portée (LCB, Long Chain Branching).

Le LDPE a de préférence un indice de fluidité (Melt Flow Index, MFI, mesuré à 190°C et sous 2,16 kg) de 0,1 à 25, de manière davantage préférée de 0,25 à 15, de manière plus particulièrement préférée de 0,5 à 8 g/10 minutes.

Le LDPE, produit par les technologies tubulaire ou autoclave, existe couramment en densité standard de 910 à 929 kg/m³ et en densité moyenne de 930 à 940 kg/m³, d'autres densités pouvant également convenir dans le cadre de l'invention.

Le MDPE (polyéthylène moyenne densité) a une densité de 926 à 940 kg/m³ et est de structure majoritairement linéaire. Il est produit par polymérisation catalytique en procédé basse pression, avec des catalyseurs pouvant être par exemple du type Phillips (chrome/silice), Ziegler-Natta.

Le MDPE a de préférence un indice de fluidité (Melt Flow Index, MFI, mesuré à 190°C et sous 2,16 kg) de 0,1 à 25, de manière davantage préférée de 0,25 à 15, de manière plus particulièrement préférée de 0,5 à 8 g/10 minutes.

Les mLLDPE (polyéthylènes métallocènes linéaires basse densité) sont des polyéthylènes dérivés du monomère éthylène, copolymérisé en procédé basse pression avec un comonomère pouvant être par exemple le butène, l'hexène, l'octène, à l'aide d'un catalyseur de la famille des métallocènes, c'est-à-dire contenant un métal de transition (principalement le zirconium ou le titane) et un ou deux ligands du type cyclopentadiényle (substitués ou non), coordonnés dans une structure en sandwich (si deux ligands), permettant une incorporation homogène et régulière du comonomère dans les chaînes de polyéthylène. Généralement linéaires, certains grades comportent une proportion de branchement à longue portée (Long Chain Branching) améliorant leur processabilité.

La densité des polyéthylènes métallocènes basse densité varie typiquement de 860 à 936 kg/m³, d'autres densités pouvant également convenir dans le cadre de l'invention.

Le Polyéthylène métallocène basse densité a de préférence un indice de fluidité (Melt Flow Index, MFI, mesuré à 190°C et sous 2,16 kg) de 0,1 à 25, de manière davantage préférée de 0,25 à 15, de manière plus particulièrement préférée de 0,5 à 8 g/10 minutes.

Le LLDPE (polyéthylène linéaire basse densité non-métallocène) est un polyéthylène obtenu par un procédé basse pression de copolymérisation catalytique d'éthylène et de courtes chaines d'alpha-oléfines, par exemple le 1-butène, le 1-hexène, le 1-octène. Il est majoritairement linéaire. Les catalyseurs utilisés sont par exemple du type Ziegler-Natta ou inorganique, par exemple du type Phillips : oxyde de chrome(VI) sur silice.

La densité des polyéthylènes linéaires basse densité non-métallocènes est généralement comprise entre 915 et 940 kg/m³, mais d'autres densités peuvent également convenir dans le cadre de l'invention.

Le polyéthylène linéaire basse densité a de préférence un indice de fluidité (Melt Flow Index, MFI, mesuré à 190°C et sous 2,16 kg) de 0,1 à 25, de manière davantage préférée de 0,25 à 15, de manière plus particulièrement préférée de 0,5 à 8 g/10 minutes.

Les copolymères polaires d'éthylène utiles dans le cadre de la présente invention sont généralement fabriqués par un procédé de polymérisation radicalaire sous haute pression, à partir d'éthylène et d'un comonomère polaire, comprenant mais n'étant pas limité à la liste suivante: l'acétate de vinyle (EVA), l'acrylate de butyle (EBA), l'acrylate de méthyle (EMA), l'acrylate d'éthyle (EEA), le méthacrylate de méthyle (EMMA), l'acide acrylique (EAA), l'hydroxyéthylméthacrylate (EHEMA), l'anhydride maléique (EMAH), l'alcool vinylique (EVOH), ... A l'instar du LDPE, ils possèdent une structure de chaine comportant du branchement à longue portée (LCB).

L'indice de fluidité (mesuré à 190°C - 2,16 kg de charge) de ces copolymères polaires d'éthylène peut varier de 0,1 à 25, préférentiellement de 0,5 à 15, plus particulièrement préféré de 0,7 à 8 g/10 minutes.

Le composant (c) peut également comprendre ou être constitué de :
- un ou plusieurs élastomères thermoplastiques à blocs styréniques (TPE-S ou TPS). Dans ces polymères séquencés, dits élastomères thermoplastiques à blocs styréniques, la fraction styrénique représente moins de 50 % en poids, de préférence moins de 45 % en poids, en particulier moins de 40 % en poids desdits polymères. Il s'agit en particulier d'un copolymère bloc styrène-butadiène-styrène (SBS, comme le KRATON D 1101), d'un copolymère bloc styrène-éthylènebutylène-styrène (SEBS, comme le KRATON G 1652), d'un copolymère bloc polystyrène-b-polyisoprène-b-polystyrène (SIS), d'un copolymère bloc polystyrène-b-poly(éthylène-propylène)-b-polystyrène (SEPS), d'un copolymère bloc polystyrène-b-poly(éthylène-éthylène/propylène)-b-polystyrène (SEEPS), et leurs variantes fonctionnalisées comprenant des groupes polaires le long du bloc médian élastomère ; ou
- un ou plusieurs élastomères thermoplastiques contenant une phase élastomère de type silicone réticulé, en particulier les mélanges d'un thermoplastique (polyoléfine, polyuréthane, polyesters, ...) avec une phase caoutchouc siliconée réticulée, voir par exemple le brevet US6479580B1, de préférence le TPSiV.

Des mélanges de plusieurs de ces produits peuvent être utilisés en tant que composant (c).

Au vu de ce qui précède, il est donc clair que dans le contexte de l'invention, la définition d'élastomères thermoplastiques à blocs styréniques de la définition du composant (c) exclut les polymères (non-séquencés) du type alcénylaromatique, c'est-à-dire les polymères linéaires ou non majoritairement constitués de monomères oléfiniques à cycle aromatique, donc les copolymères alcénylaromatiques comprenant plus de 50 % en poids de mononmères alcénylaromatiques, notamment des monomères styréniques. Les polymères du type alcénylaromatique exclus comprennent notamment mais ne sont pas limités à la liste suivante: les styrènes, α-méthylstyrène, o-méthylstyrène, m-méthylstyrène, p-méthystyrène, α-éthylstyrène, α-vinylxylène, α-chlorostyrène, α-bromostyrène, vinyltoluène, les homopolymères de styrène.

Les mousses utilisables selon l'invention peuvent en outre comprendre des additifs et adjuvants usuels, notamment ceux choisis dans le groupe comprenant des agents nucléants de cellules, des agents dénucléants de cellules, des agents de contrôle de stabilité dimensionnelle, des agents antistatiques, des pigments, des antioxydants, des anti-UV, des lubrifiants, des agents antifeu et des pigments réflecteurs / absorbeurs d'infrarouges, des agents de cristallisation.

La présente invention permet d'obtenir des tubes d'isolation thermique, panneaux d'isolation thermique, joints d'étanchéité, cales de séparation pour pièces à haute température, comprenant une mousse décrite ici.

Le présent document décrit également un procédé de fabrication d'une mousse selon l'invention. Ledit procédé comprend les étapes suivantes :
(i) dosage des composants (a), (b) et le cas échéant (c), ainsi qu'éventuellement dosage d'autres additifs et/ou adjuvants, prémélangés ou dosés individuellement, à l'alimentation d'une extrudeuse ;
(ii) plastification et mélange des composants à haute température pour fondre et homogénéiser les composants ;
(iii) injection d'un gaz de moussage ;
(iv) homogénéisation des composants et du gaz ;
(v) refroidissement de la masse ;
(vi) extrusion à l'air libre à travers une filière, contrôlée en température, ayant une section de forme prédéfinie, provoquant la formation de la mousse ; et
(vii) refroidissement de la mousse ainsi formée.

Le refroidissement de la mousse à l'étape (vii) peut se faire de manière active après la sortie de la filière. L'étape (vii) peut comprendre en outre l'étirage et le guidage de la mousse formée.

L'invention concerne donc l'utilisation d'une mousse telle que décrite ici pour la fabrication de tubes d'isolation thermique, de panneaux d'isolation thermique, de joints d'étanchéité, de cales pour pièces à haute température, résistants à des températures supérieures à 90 °C, voire 100 °C ou plus.

Pour illustrer l'utilité des mousses même dans à des températures élevées dépassant nettement 90 °C, on a testé, selon la norme ASTM C411, un panneau d'une mousse de l'invention, comprenant 60 % en poids de HDPE multimodal, de 60 cm par 60 cm et 12 - 13mm d'épaisseur, densité 25 kg/m³, maintenu en contact sur une des deux surfaces planes avec une plaque de métal portée à 121°C. Il est surprenant pour l'homme de métier qu'il n'y ait pas eu de fusion, pas de dégradation, et pas de changements notables de dimensions de la mousse conformément à cette norme.

L'invention sera illustrée plus amplement ci-dessous au moyen de quelques exemples, tant selon l'invention, que comparatifs.

### Exemples

### Matériel et méthode

Les essais ont été effectués au moyen d'une extrudeuse monovis de diamètre 25 mm, L/D = 34. L'agent moussant était l'isobutane.

Les produits utilisés dans les essais d'une utilisation selon l'invention et dans les essais comparatifs étaient les suivants :
HDPE A : HOSTALEN ACP 9240 Plus NAT, LYONDELLBASELL, HDPE multimodal, 946 kg/m³, MFI[190 °C-5 kg] = 0,2, avec AOX
HDPE B : LUMICENE M5510EP, TOTAL, HDPE métallocène, monomodal, densité 955 kg/m³, MFI[190 °C-2,16 kg] = 1,2, T° fusion = 134°C
Ionomère A : SURLYN 1705-1, DuPont de Nemours, ionomère éthylène acide méthacrylique, contre-ion = Zn, MFI = 5,5 - 15 % groupes acides - faible neutralisation; T° fusion = 95 °C - T° solidif. = 61 °C
Ionomère B : SURLYN 9520, DuPont de Nemours, ionomère éthylène acide méthacrylique, contre-ion = Zn, MFI = 1,1 - 10 % groupes acides - neutralisation élevée ; T° fusion = 96 °C - T° solidif. = 76 °C
Ionomère C : SURLYN 1652, ionomère éthylène acide méthacrylique, contre-ion = Zn, MFI = 5,2 - 9 % groupes acides - faible neutralisation ; T° fusion = 100 °C - T° solidif. = 80 °C
LDPE A : LDPE 2202 UMS, SABIC, LDPE, 922 kg/m³, MFI[190 °C-2,16 kg] = 2
LDPE B : 2601TX17, SABIC, LDPE densité 926 kg/m³, MFI[190 °C-2,16 kg] = 0,65
OSV 90 : concentré 90 % mélange amide d'acides gras C16-C18 + 10 % EVA
MBTA50D, masterbatch (mélange-maître, MB) de 50 % talc dans 50 % de LDPE
VIBATAN XPS 0330 VIBA, masterbatch de polyéthylène et d'amides d'acides gras lubrifiants
MB alu 40 : masterbatch de 40 % en poids d'aluminium et de LLDPE
VIBA 01311 : VIBA, masterbatch de LDPE et 20 % d'antioxydant phénolique.

Les différents composants ont été introduits dans l'alimentation de l'extrudeuse, plastifiés et mélangés à haute température pour fondre et homogénéiser les composants. Le gaz de moussage, ici l'isobutane, a été injecté et on a procédé à l'homogénéisation des composants et du gaz, puis au refroidissement partiel de la masse à la température d'extrusion. L'extrusion s'est faite à l'air libre à travers une filière, contrôlée en température, ayant une section de forme appropriée de manière à former des tubes de mousse d'un diamètre intérieur d'environ 15 mm avec une épaisseur de paroi d'environ 5 mm (tube 15-5). La référence pour la taille cellulaire des autres essais est la mousse de l'essai 1.

| | **Essai 1** | | **Essai 2** | | **Essai 3** | |
|---|---|---|---|---|---|---|
| Composants | Parts | % en poids | parts | % en poids | Parts | % en poids |
| HDPE A | 85 | 75,9% | 95 | 84,8% | 95 | 84,8% |
| HDPE B | | | | | | |
| LDPE A | 10 | 8,9% | | | 10 | 8,9% |
| Ionomère A | 10 | 8,9% | 10 | 8,9% | | |
| Ionomère B | | | | | | |
| Ionomère C | | | | | | |
| OSV 90 | 6 | 5,4% | 6 | 5,4% | 6 | 5,4% |
| MBTA50D | 1 | 0,9% | 1 | 0,9% | 1 | 0,9% |
| type mousse | tube 15-5 | | tube 15-5 | | tube 15-5 | |
| débit extrudeuse (tpm vis doseur) | 60 | | 60 | | 60 | |
| débit gaz (g isobutane/min) | 5,1 | | 5,3 | | 5,3 | |
| T° masse entrée filière (°C) | 128,2 | | 128,4 | | 129,1 | |
| Pression entrée filière (bar) | 25 | | 25,5 | | 32,5 | |
| densité mousse (kg/m³) | 28-29 | | 27,7 | | 31,6 | |
| qualité surface | OK | | ondulations légères | | amorces plis à la filière | |
| rupture écoulement? | NON | | NON | | NON | |
| cellules ouvertes (% volume) | 0,17 | | 0,17 | | 0,20 | |
| taille cellules | référence | | idem réf | | idem réf | |

| | **Essai 4** | | **Essai 5** | | **Essai 6** | |
|---|---|---|---|---|---|---|
| Composants | Parts | % en poids | parts | % en poids | Parts | % en poids |
| HDPE A | 90 | 80,4% | 90 | 80,4% | 90 | 80,4% |
| HDPE B | | | | | | |
| LDPE A | 10 | 8,9% | 10 | 8,9% | 10 | 8,9% |
| Ionomère A | 5 | 4,5% | | | | |
| Ionomère B | | | 5 | 4,5% | | |
| Ionomère C | | | | | 5 | 4,5% |
| OSV 90 | 6 | 5,4% | 6 | 5,4% | 6 | 5,4% |
| MBTA50D | 1 | 0,9% | 1 | 0,9% | 1 | 0,9% |
| type mousse | tube 15-5 | | tube 15-5 | | tube 15-5 | |
| débit extrudeuse (tpm vis doseur) | 60 | | 60 | | 60 | |
| débit gaz (g isobutane/minute) | 5,3 | | 5,2 | | 5,1 | |
| T° masse entrée filière (°C) | 128,9 | | 128,5 | | 128,4 | |
| Pression entrée filière (bar) | 28,5 | | 30 | | 28,5 | |
| densité mousse (kg/m³) | 26,3 | | 25,5 | | 28 | |
| qualité surface | OK | | OK | | OK | |
| rupture écoulement? | NON | | NON | | NON | |
| cellules ouvertes (% volume) | 0,20 | | 0,23 | | 0,17 | |
| taille cellules | idem réf | | idem réf | | idem réf | |

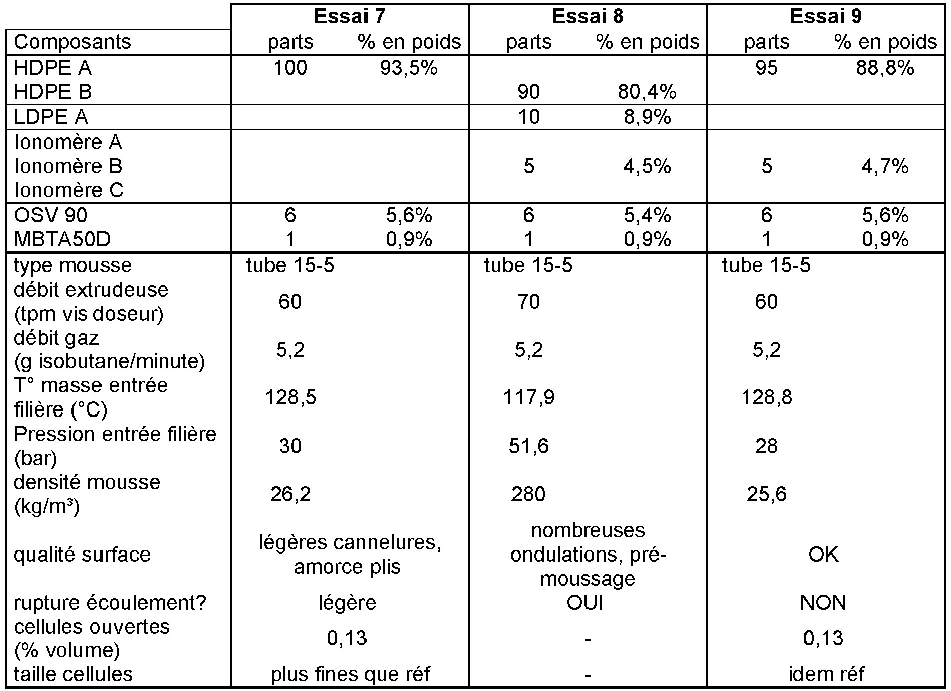

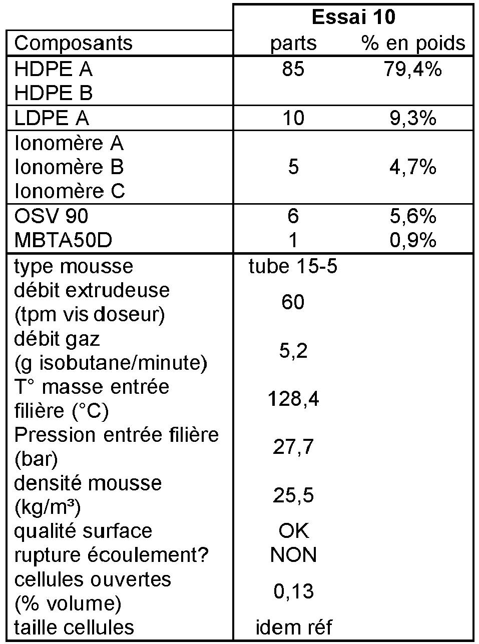

Des essais réalisés et illustrés dans les tableaux ci-dessus, on peut dégager les tendances suivantes :
L'essai 1 est représentatif de l'invention avec LDPE optionnel. Il comporte un HDPE multimodal, un LDPE et un ionomère.
L'essai 2 (représentatif de l'invention sans LDPE) = l'essai 1 sans le LDPE, en compensant la différence par du HDPE supplémentaire. La mousse est toujours à cellules fermées, mais la surface est affectée par de légères ondulations.
L'essai 3 (comparatif) = l'essai 1 sans l'ionomère : la densité monte tout de suite pour une même proportion de gaz que dans l'essai 2, montrant une moins bonne moussabilité. Les cellules sont cependant fermées, des plis sont visibles à la sortie de la mousse en filière (non présents dans les essais 1 et 2).
L'essai 4 (représentatif de l'invention) : ajout de 5 parts d'ionomère à l'essai 3, en enlevant du HDPE. Au même gaz que l'essai 3, la densité redescend, la qualité de la mousse s'améliore en surface, il n'y a plus d'amorces de plis à l'outil.
L'essai 5 (représentatif de l'invention) = l'essai 4 mais avec un autre ionomère (ionomère B). La mousse est tout aussi satisfaisante, on a même pu diminuer un peu la quantité de gaz pour obtenir une densité un peu plus basse.
L'essai 6 (représentatif de l'invention) = l'essai 5 mais avec un autre ionomère (ionomère C). La mousse est tout aussi satisfaisante, même à densité un peu plus élevée (moins de gaz).
L'essai 7 (comparatif) comporte comme résine le HDPE multimodal seul. Bien que de basse densité et à cellules fermées, la surface est dégradée (amorce de rupture d'écoulement, « cannelures » en surface), les cellules sont tout de suite plus fines que les essais précédents, les plis réapparaissent à l'outil d'extrusion.
L'essai 8 (comparatif) = l'essai 5 où l'on a utilisé un HDPE unimodal. Le moussage est très inférieur ; même en descendant la température très bas, on n'atteint pas une densité plus faible que ± 280 kg/m³, la surface montre de la rupture d'écoulement.
L'essai 9 (représentatif de l'invention sans LDPE) montre que l'ionomère B semble supérieur à l'ionomère A de l'essai 2 car même sans LDPE, avec plus de HDPE que l'essai 2 et avec seulement 5 parts d'ionomère B, la mousse est plus légère, à cellules fermées et d'aspect satisfaisant.
L'essai 10 (représentatif de l'invention) est une variante de l'essai 1, en changeant par rapport à celui-ci l'ionomère (ionomère B), avec moins de cet ionomère (et plus de HDPE). La mousse est cependant satisfaisante à tout point de vue.

D'autres essais ont été réalisés sur d'autres mousses de plus grande section et à plus haut débit. Les compositions ont été plus uniformes, avec d'autres additifs (particules d'aluminium, lubrifiants, ...), et avec environ 60 % en poids de HDPE multimodal. Ces essais ont confirmé que les compositions dans l'utilisation selon l'invention permettent d'obtenir de manière consistante et reproductible des mousses de faibles densités avec un aspect tout à fait satisfaisant ou même bon.

L'essai suivant a été réalisé en incorporant des quantités réduites d'autres ingrédients, notamment des paillettes d'aluminium et un antioxydant phénolique.

| | **Essai 11** | |
|---|---|---|
| Composants | Parts | % en poids |
| HDPE A | 65 | 60,5 |
| Ionomère A | 10 | 9,3 |
| LDPE B | 20 | 18,6 |
| OSV90 | 6 | 5,6 |
| VIBATAN XPS 0330 | 4 | 3,7 |
| MB alu 40 | 2,05 | 1,9 |
| VIBA 01311 | 0,36 | 0,4 |

La filière utilisée était de nouveau un tube. Le débit était de 10 kg/h, le débit de gaz (isobutane) était de 16,5 g/minute. La mousse de cet essai 11 avait une densité de 31 kg/m³, avec des dimensions du tube diamètre intérieur = 13 mm - épaisseur = 13 mm, la température à l'entrée de la filière d'extrusion était de 132,1 °C, la pression avant la filière était de 29,5 bar. Les cellules sont fermées, la surface de la mousse est régulière (pas de rupture d'écoulement, de cannelures, ondulations, ...).

Des tests de résistance en température sur cet essai 11 ont montré de manière tout à fait surprenante pour l'homme de métier que dans un four à 121 °C, le retrait longitudinal de cette mousse n'était que de 7,3 %.

Le tableau ci-dessous présente diverses mesures, effectuées sur différentes qualités de mousse, de la perte d'épaisseur (en pourcent de l'épaisseur initiale) d'un tube de mousse (dimensions : diamètre intérieur - épaisseur en mm), placé sur une conduite métallique parcourue d'un fluide caloporteur durant 72 heures, en fonction de la température de ce fluide : par pas de 5 °C jusqu'à 100 °C, puis par pas de 10 °C ; selon la norme EN 14707.

| | Plaque 60x20mm base HDPE, représentatif utilisé selon l'invention | Tube de mousse 22-09, LDPE | Tube de mousse 16,5-09, LDPE réticulée au silane | Feuille mousse LDPE réticulée au peroxyde, enroulée sur la conduite |
|---|---|---|---|---|
| COMPOSANTS | Parts en poids | | | |
| HDPE A | 65,5 | | | |
| LDPE A | | 100 | | |
| LDPE B | 10 | | 30 | |
| IONOMERE A | 10 | | | |
| mLLDPE (QUEO 1001, BOREALIS) | 10 | | | |
| OSV 90 | 6 | 1,5 | | |
| MBTA50D | 1 | | 4 | |
| MB ALU 40 | 2,4 | 2 | | |
| VIBATAN XPS 0330 | 5 | | | |
| LDPE -g-silane (VISICO LE 4423, BOREALIS) | | | 70 | |
| ATMER 1012 (GMS, CRODA) | | | 2 | |
| Masterbatch catalyseur réticulation (AMBICAT LE 4476, BOREALIS) | | | 5 | |
| LDPE | | | | x |
| Peroxyde | | | | y |
| Couleur | | | | z |
| Azodicarbonamide | | | | t |
| Critère de mesure | Résultats | | | |
| Densité mousse (kg/m³) | 25 | 26 | 30 | 30 |
| % perte épaisseur sur conduite à 100°C | n.m. | 1,6 | n.m. | n.m. |
| % perte épaisseur sur conduite à 110°C | n.m. | 25,8 | 10,7 | 6,1 |
| % perte épaisseur sur conduite à 120°C | 6,3* | n.m. | 20,1 | 14,1 |

| | | | | |
|---|---|---|---|---|
| * : mesure au four et pas sur conduite, donc test nettement plus exigeant que la norme EN14707 ; x, y, z et t : quantité non connue ; n.m. : non mesuré. | | | | |

## Revendications

1. Utilisation d'une mousse à base de polyoléfines comprenant un mélange de
(a) 40,9 à 99,9 % en poids d'au moins un polymère HDPE à distribution multimodale des poids moléculaires,
(b) de 0,1 à 59,1 % en poids d'au moins un ionomère choisi parmi les copolymères thermoplastiques réticulés ioniquement, dans lesquels une proportion de 1 à 40 % de motifs de répétition porte des groupes ioniques et optionnellement des groupes ionisables, et
(c) de 0 à 59 % en poids d'au moins un constituant sélectionné parmi les LDPE, les LDPE métallocènes, les LLDPE, les LLDPE métallocènes, les MDPE, les copolymères polaires d'éthylène, les élastomères thermoplastiques à blocs styréniques et les élastomères thermoplastiques contenant une phase élastomère de type silicone réticulé,
pour la fabrication de tubes d'isolation thermique, de panneaux d'isolation thermique, de cales de séparation de pièces à haute température, ou de joints d'étanchéité, résistants à des températures supérieures à 90 °C.

2. Utilisation selon la revendication 1 dans laquelle le au moins un polymère HDPE à distribution multimodale des poids moléculaires du composant (a) est un polymère HDPE comportant au moins deux fractions, chacune de ces fractions représentant au moins 1 % en poids du polymère HDPE, ayant des moyennes en poids du poids moléculaire M_{w} différentes, ledit polymère HDPE ayant un rapport M_{w}/Mₙ total entre 2,5 et 60, de préférence entre 8 et 30, de manière davantage préférée entre 10 et 20.

3. Utilisation selon la revendication 1 ou 2, dans laquelle l'indice de fluidité, mesuré à 190 °C avec une charge de 5,0 kg, du ou des HDPE à distribution multimodale des poids moléculaires est compris entre 0,05 et 10 g/10 minutes, de préférence entre 0,1 et 5 g/10 minutes, de manière plus particulièrement préférée entre 0,2 et 2,5 g/10 minutes.

4. Utilisation selon l'une quelconque des revendications 1 à 3, dans laquelle le ou les ionomères du composant (b) sont choisis dans le groupe des polymères comprenant des groupes acides au moins partiellement neutralisés par des contre-ions monovalents ou divalents, de préférence des copolymères d'éthylène et d'acide méthacrylique.

5. Utilisation selon la revendication 4, dans laquelle les contre-ions monovalents ou divalents sont choisis parmi le sodium, le lithium, le calcium, le magnésium et/ou le zinc, le degré de neutralisation des groupes acides étant de préférence inférieure à 80 %.

6. Utilisation selon l'une quelconque des revendications 1 à 5, dans laquelle le composant (c) représente de 0,1 à 59 % en poids de la mousse, de LDPE métallocène ou non, de LLDPE métallocène ou non ou de MDPE ou d'un mélange de ceux-ci.

7. Utilisation selon l'une quelconque des revendications 1 à 6, comprenant en outre des additifs et adjuvants usuels, choisis dans le groupe constitué des agents nucléants de cellules, des agents dénucléants de cellules, des agents de contrôle de stabilité dimensionnelle, des agents antistatiques, des pigments, des antioxydants, des anti-UV, des lubrifiants, des agents antifeu et des pigments réflecteurs / absorbeurs d'infrarouges, des agents de cristallisation.

## Patentansprüche

1. Verwendung eines Schaumstoffs auf Grundlage von Polyolefinen, der eine Mischung aus Folgendem umfasst
(a) 40,9 bis 99,9 Gewichts-% mindestens eines PE-HD-Polymers mit multimodaler Verteilung der Molekulargewichtswerte,
(b) 0,1 bis 59,1 Gewichts-% mindestens eines Ionomers, das aus den ionisch vernetzten thermoplastischen Copolymeren ausgewählt ist, bei welchen ein Anteil von 1 bis 40 % der Wiederholbausteine mit ionischen Gruppen und möglicherweise mit ionisierbaren Gruppen versehen ist, und
(c) 0 bis 59 Gewichts-% mindestens einer Komponente, die aus den PE-LD, des Metallocen-PE-LD, den PE-LLD, den Metallocen-PE-LLD, den PE-MD, den polaren Ethylencopolymeren, den thermoplastischen Elastomeren mit Styrolblöcken und den thermoplastischen Elastomeren, welche eine Elastomerphase vom Typ vernetztes Silikon enthalten, ausgewählt ist
zur Herstellung von Wärmedämmröhren, Wärmedämmplatten, Trennkeilen für Teile mit hoher Temperatur oder von Dichtungen, wobei diese widerstandsfähig gegen Temperaturen von mehr als 90 °C sind.

2. Verwendung nach Anspruch 1, wobei es sich bei dem mindestens einen PE-HD-Polymer mit multimodaler Verteilung der Molekulargewichtswerte des Bestandteils (a) um ein PE-HD-Polymer handelt, das mindestens zwei Fraktionen umfasst, wobei jede dieser Fraktionen mindestens 1 Gewichts-% des PE-HD-Polymers ausmacht und sie unterschiedliche Gewichtsmittel des Molekulargewichts M_{w} aufweisen, wobei das PE-HD-Polymer ein Gesamtverhältnis von M_{w}/Mₙ zwischen 2,5 und 60, vorzugsweise zwischen 8 und 30, auf stärker bevorzugte Weise zwischen 10 und 20, aufweist.

3. Verwendung nach Anspruch 1 oder 2, wobei der Schmelzflussindex, gemessen bei 190 °C unter einer Last von 5,0 kg, des oder der PE-HD mit multimodaler Verteilung der Molekulargewichtswerte im Bereich von 0,05 bis 10 g / 10 Minuten, vorzugsweise von 0,1 bis 5 g / 10 Minuten, auf besonders bevorzugte Weise von 0,2 bis 2,5 g / 10 Minuten, liegt.

4. Verwendung nach einem beliebigen der Ansprüche 1 bis 3, wobei das oder die lonomere des Bestandteils (b) aus der Gruppe der Polymere, die saure Gruppen umfassen, welche mindestens teilweise mit einwertigen oder zweiwertigen Gegenionen neutralisiert sind, vorzugsweise der Copolymere von Ethylen und Methacrylsäure, ausgewählt sind.

5. Verwendung nach Anspruch 4, wobei die einwertigen oder zweiwertigen Gegenionen aus Natrium, Lithium, Calcium, Magnesium und/oder Zink ausgewählt sind, wobei der Neutralisierungsgrad der sauren Gruppen vorzugsweise geringer als 80 % ist.

6. Verwendung nach einem beliebigen der Ansprüche 1 bis 5, wobei der Bestandteil (c) 0,1 bis 59 Gewichts-% des Schaumstoffs ausmacht, an PE-LD vom Metallocentyp oder nicht, an PE-LLD vom Metallocentyp oder nicht, oder an PE-MD oder an einer Mischungen derselben.

7. Verwendung nach einem beliebigen der Ansprüche 1 bis 6, wobei diese darüber hinaus übliche Zusatzstoffe und Hilfsstoffe umfasst, die aus der Gruppe ausgewählt sind, welche aus Nukleierungsmitteln für Zellen, Nukleierungshemmstoffen für Zellen, Mitteln zur Beherrschung der dimensionsbezogenen Stabilität, Antistatika, Pigmenten, Antioxidantien, UV-Filtern, Gleitmitteln, Flammschutzmitteln und Pigmenten zur Reflexion/Absorption von Infrarotstrahlung, Kristallisationsmitteln besteht.

## Claims

1. Use of a polyolefin-based foam comprising a mixture of
(a) 40.9 to 99.9% by weight of at least one HDPE polymer with a multimodal molecular weight distribution,
(b) 0.1 to 59.1% by weight of at least one ionomer selected from ionically crosslinked thermoplastic copolymers in which a proportion of 1 to 40% of repeat units bears ionic groups and optionally ionisable groups, and
(c) 0 to 59% by weight of at least one component selected from LDPEs, metallocene LDPEs, LLDPEs, metallocene LLDPEs, MDPEs, polar copolymers of ethylene, thermoplastic elastomers with styrene blocks and thermoplastic elastomers containing an elastomer phase of the crosslinked silicone type,
for the production of thermal insulation tubes, thermal insulation panels, separation wedges for high-temperature rooms, or gaskets resistant to temperatures of above 90°C.

2. Use according to claim 1, in which the at least one component (a) HDPE polymer with a multimodal molecular weight distribution is an HDPE polymer comprising at least two fractions, each of which fractions constitutes at least 1% by weight of the HDPE polymer, having different weight-average molecular weights M_{w}, said HDPE polymer having an overall M_{w}/Mₙ ratio of between 2.5 and 60, preferably between 8 and 30 and more preferably between 10 and 20.

3. Use according to claim 1 or 2, in which the melt flow index, measured at 190°C with a load of 5.0 kg, of the HDPE(s) with a multimodal molecular weight distribution is between 0.05 and 10 g /10 minutes, preferably between 0.1 and 5 g /10 minutes and more particularly preferably between 0.2 and 2.5 g / 10 minutes.

4. Use according to any one of claims 1 to 3, in which the component (b) ionomer(s) is/are selected from the group of polymers comprising acid groups at least partially neutralised by monovalent or divalent counterions, preferably copolymers of ethylene and methacrylic acid.

5. Use according to claim 4, in which the monovalent or divalent counterions are selected from sodium, lithium, calcium, magnesium and/or zinc, the degree of neutralisation of the acid groups preferably being less than 80%.

6. Use according to any one of claims 1 to 5, in which component (c) constitutes from 0.1 to 59% by weight of the foam, of metallocene or non-metallocene LDPE, of metallocene or non-metallocene LLDPE or of MDPE or of a mixture of these.

7. Use according to any one of claims 1 to 6 furthermore comprising conventional additives and auxiliaries elected from the group made up cell nucleating agents, cell denucleating agents, dimensional stability control agents, antistatic agents, pigments, antioxidants, UV stabilisers, lubricants, fire-resistant agents and infrared-reflective/absorbent pigments and crystallisation agents.
